# EUROPÄISCHE PATENTSCHRIFT

(11) **EP 2 313 852 B1**
(45) Veröffentlichungstag und Bekanntmachung des Hinweises auf die Patenterteilung: **01.02.2012**
(21) Anmeldenummer: 09781681.3
(22) Anmeldetag: 11.08.2009
(51) Int. Cl.: G06K 19/073

(54) **DOKUMENT UND VERFAHREN ZUR SELBSTVERIFIKATION EINES DOKUMENTS**
DOCUMENT AND METHOD FOR SELF-VERIFICATION OF A DOCUMENT
DOCUMENT ET PROCÉDÉ POUR LA VÉRIFICATION AUTOMATIQUE D UN DOCUMENT

(30) Priorität: 18.08.2008 DE 102008041306
(43) Veröffentlichungstag der Anmeldung: 27.04.2011
(73) Patentinhaber: Bundesdruckerei GmbH, 10958 Berlin (DE)
(72) Erfinder: PFLUGHOEFFT, Malte, 13347 Berlin (DE)
(74) Vertreter: Richardt Patentanwälte
(86) Internationale Anmeldenummer: PCT/EP2009/060355
(87) Internationale Veröffentlichungsnummer: WO 2010/020558

(56) Entgegenhaltungen:
- WO-A-2006/061780
- US-A1- 2004 012 496

## Beschreibung

Die Erfindung betrifft ein Dokument mit einer integrierten Schaltung, ein Verfahren zur Selbstverifikation eines Dokuments sowie ein Computerprogrammprodukt.

Aus WO 2006/061780 A1 ist eine Chipkarte mit einem RFID-Chip bekannt. Ein Lichtsensor ist mit dem RFID-Chip gekoppelt, sodass der RFID-Chip über den Lichtsensor Ausnahmesignale empfangen kann. Für die Einkopplung eines Ausnahmesignals wird das Kartenmaterial der Chipkarte mit einem Laserstrahl beaufschlagt. Durch eine sogenannte Upconversion des Laserstrahls durch das Kartenmaterial entsteht Strahlung einer höheren Frequenz, welche der Lichtsensor empfängt.

Demgegenüber liegt der Erfindung die Aufgabe zugrunde, ein verbessertes Dokument, ein Verfahren zur Selbstverifikation eines Dokuments sowie ein entsprechendes Computerprogrammprodukt zu schaffen.

Die der Erfindung zugrunde liegenden Aufgaben werden jeweils mit den Merkmalen der unabhängigen Patentansprüche 1,12 und 15, gelöst. Ausführungsformen der Erfindung sind in den abhängigen Ansprüchen angegeben.

Nach einer Ausführungsform der Erfindung wird ein Dokument mit einer integrierten Schaltung geschaffen, wobei es sich bei der integrierten Schaltung um einen Chip mit einer Funkschnittstelle, insbesondere einen sogenannten RFID-Chip, handeln kann.

Das Dokument hat einen Konversionsbereich zur Frequenzkonvertierung von auf den Konversionsbereich einfallender Strahlung. Der Konversionsbereich kann für eine sogenannte Upconversion, bei der die Frequenz der Strahlung erhöht wird, oder eine sogenannte Down-Conversion, bei der die Frequenz der Strahlung verringert wird, ausgebildet sein. Der Konversionsbereich kann durch eine zum Beispiel aufgedruckte Down-Conversion-Farbe, wie zum Beispiel eine fluoreszierende Farbe, oder eine Upconversion-Farbe gebildet werden. Alternativ oder zusätzlich kann der Konversionsbereich auch durch den Dokumentenkörper selbst oder einen Bereich des Dokumentenkörpers gebildet werden, beispielsweise ein oder mehrere Schichten des Dokumentenkörpers.

Das Dokument beinhaltet Sendemittel zur Sendung einer Strahlung zu dem Konversionsbereich sowie Empfangsmittel zum Empfang der konvertierten Strahlung von dem Konversionsbereich. Die Empfangsmittel sind daneben zur Erzeugung eines Empfangssignals, welche erzeugt wird, wenn die konvertierte Strahlung empfangen wurde, und zur Eingabe des Empfangssignals in die integrierte Schaltung ausgebildet. Die integrierte Schaltung wertet das Empfangssignal aus, um anhand dessen eine Selbstverifikation des Dokuments vorzunehmen.

Beispielsweise sind die Sendemittel dazu ausgebildet, die Strahlung in einem ersten Frequenzbereich auszusenden, der von einem zweiten Frequenzbereich, in dem die Empfangsmittel Strahlung empfangen können, verschieden ist. Der Konversionsbereich ist hingegen so ausgebildet, dass er Strahlung von dem ersten Frequenzbereich in den zweiten Frequenzbereich konvertieren kann. Die von den Sendemitteln gesendete Strahlung kann also nur dann von den Empfangsmitteln korrekt empfangen werden, wenn nach der Konvertierung der Strahlung durch den Konversionsbereich Strahlung in dem zweiten Frequenzbereich vorliegt. Zur Selbstverifikation des Dokuments wird das entsprechend erzeugte Empfangssignal dann von der integrierten Schaltung hinsichtlich ein oder mehrerer Kriterien überprüft. Beispielsweise wird von der integrierten Schaltung geprüft, ob die Energie des Empfangssignals in einem vorgegebenen Sollbereich liegt. Ist dies der Fall, so liegt eine erfolgreiche Selbstverifikation vor, im gegenteiligen Fall wird das Dokument als gefälscht betrachtet.

Beispielsweise sind die Sendemittel und die Empfangsmittel derart räumlich angeordnet, dass die von den Sendemitteln ausgehende Strahlung nicht von den Empfangsmitteln empfangen werden können. Der Konversionsbereich ist hingegen so ausgebildet, dass er von der von den Sendemittel ausgehenden Strahlung erreicht wird und die von dem Konversionsbereich ausgehende Strahlung von den Empfangsmitteln empfangen werden kann. Die Empfangsmittel können dann auch so ausgebildet sein, dass sie die von den Sendemitteln ausgehende Strahlung empfangen könnten, also dass die Empfangsmittel auch im Frequenzbereich der Sendemittel Strahlung empfangen können.

Nach Ausführungsformen der Erfindung wird durch den Konversionsbereich ein optisches Sicherheitsmerkmal des Dokuments gebildet.

Nach einer Ausführungsform sind die Sendemittel und/oder die Empfangsmittel ganz oder teilweise Bestandteil der integrierten Schaltung. Beispielsweise beinhalten die Sendemittel zumindest eine Leuchtdiode (LED), die einen integralen Bestandteil der integrierten Schaltung bildet. Hierdurch wird eine Strahlungsquelle gebildet, die je nach Ausführungsform der LED in einem relativ engen oder in einem relativ breiten Frequenzbereich Strahlung abgeben kann. LEDs, welche über einen relativ breiten Spektralbereich Strahlung abgeben, sind zum Beispiel weiße LEDs, welche über den ganzen sichtbaren Bereich verschiedene Banden aufweisen. Schmalbandige LEDs haben typischer Weise einen spektralen Bereich von typischer Weise ±10 nm, in welchem diese Strahlung emittieren. Laser-LEDs können eine Bande von ±1 nm aufweisen. Um die Sendemittel zu realisieren, welche nur in dem ersten Frequenzbereich Strahlung abgeben sollen, beziehungsweise um diesen Bereich weiter einzugrenzen, kann ein optischer Filter vorgesehen sein, welcher nur Strahlung in dem ersten Frequenzbereich durchlässt. Dieser Filter kann zum Beispiel drucktechnisch in dem Strahlengang von der Strahlungsquelle zu dem Konversionsbereich aufgebracht sein.

Es können auch mehrere Strahlungsquellen vorhanden sein, in deren Strahlengängen zu dem Konversionsbereich jeweils unterschiedliche Filter angeordnet sind, um den Konversionsbereich mit Strahlung unterschiedlicher Frequenzbereiche beaufschlagen zu können. Die Beaufstrahlung des Konversionsbereichs mit solcher Strahlung unterschiedlicher Frequenzbereiche führt zu jeweils unterschiedlichen Empfangssignalen der Empfangsmittel oder auch zu keinem Empfangssignal, wenn der Konversionsbereichs durch die betreffende Strahlung nicht anregbar ist, was mit in die Auswertung eingehen kann.

Nach einer Ausführungsform der Erfindung beinhalten die Empfangsmittel einen Strahlungssensor. Um den Detektionsbereich des Strahlungssensors auf den zweiten Frequenzbereich zu reduzieren, kann in dem Strahlengang zwischen dem Konversionsbereich und dem Strahlungssensor ein entsprechender optischer Filter angeordnet sein, welcher nur Strahlung in dem zweiten Frequenzbereich durchlässt. Auch dieser Filter kann drucktechnisch aufgebracht sein.

Nach einer Ausführungsform der Erfindung sind die Sendemittel von der integrierten Schaltung ansteuerbar. Beispielsweise ist die integrierte Schaltung so ausgebildet, dass die Sendemittel zur Sendung der Strahlung angesteuert werden, sodass das daraufhin empfangene Empfangssignal mit der zuvor erfolgten Ansteuerung der Sendemittel für die Zwecke der Auswertung korreliert werden kann. Insbesondere kann die integrierte Schaltung so ausgebildet sein, dass die Ansteuerung der Sendemittel programmgesteuert erfolgt sowie auch die Auswertung des oder der Empfangssignale.

Nach einer Ausführungsform der Erfindung sind die Sendemittel von der integrierten Schaltung ansteuerbar, um Strahlung in dem ersten Frequenzbereich abzusenden sowie ferner, um Strahlung in einem dritten Frequenzbereich abzusenden, welcher von den ersten und zweiten Frequenzbereichen verschieden ist und den Konversionsbereich nicht anregt. Von den Sendemitteln abgestrahlte Strahlung des dritten Frequenzbereichs darf also nicht zu einem validen Empfangssignal führen, wenn es sich um ein echtes Dokument handelt. Dagegen darf nur die Sendung der Strahlung in den ersten Frequenzbereich zu einem validen Empfangssignal führen.

Nach einer Ausführungsform der Erfindung sind sowohl in dem ersten Frequenzbereich als auch in dem zweiten Frequenzbereich abgesendete Strahlung in der Lage, den Konversionsbereich anzuregen, jedoch in unterschiedlicher Stärke. Die im zweiten Frequenzbereich von den Empfangsmitteln empfangene Strahlung hat je nach Anregung im ersten oder dritten Frequenzbereich eine andere Intensität, was als Echtheitsmerkmal ausgewertet werden kann.

Durch die Sendung von Strahlung nicht nur in dem ersten Frequenzbereich, sondern auch in dem dritten Frequenzbereich, ist also ein zusätzliches Sicherheitskriterium gegeben, durch welches die Fälschungssicherheit des Dokuments weiter erhöht wird.

Nach Ausführungsformen der Erfindung sind die Empfangsmittel zur Erzeugung eines weiteren Empfangssignals ausgebildet, wenn die Sendemittel keine Strahlung absenden. Das weitere Empfangssignal geht dabei in die Auswertung ein, um die Selbstverifikation des Dokuments vorzunehmen.

Alternativ oder zusätzlich kann das von den Empfangsmitteln abgegebene Empfangssignal dann von der integrierten Schaltung ausgewertet werden, wenn keine Strahlung von den Sendemitteln abgegeben wird. Das Empfangssignal repräsentiert dann einen sogenannten Dunkelwert, welcher nur durch die Umgebungsbeleuchtung verursacht wird. Da die Umgebungsbeleuchtung mit in das Empfangssignal eingehen kann, auch wenn die Sendemittel Strahlung in dem ersten bzw. dritten Frequenzbereich abstrahlen, ist es vorteilhaft, dass dieser Dunkelwert mit in die Auswertung eingeht, damit eine sichere Auswertung auch bei verschiedenen Intensitäten der Umgebungsbeleuchtung erfolgen kann.

Nach einer Ausführungsform der Erfindung verfügt das Dokument über keine eigene Energieversorgung. Die Energieversorgung erfolgt durch Einkopplung von Energie über die Funkschnittstelle. Beispielsweise wird durch ein von einem Lesegerät empfangenes Lesekommando Energie in die integrierte Schaltung des Dokuments eingekoppelt, sodass diese aktiviert wird. Mit Hilfe dieser Energie führt die integrierte Schaltung die Selbstverifikation durch. Wenn die Selbstverifikation erfolgreich war, greift die integrierte Schaltung auf in einem Speicher gespeicherte Daten zu und sendet diese an das Lesegerät zurück. Neben der erfolgreichen Selbstverifikation kann eine Überprüfung von weiteren notwendigen Bedingungen erfolgen, die zur Freigabe der Versendung der Daten an das Lesegerät erfüllt sein müssen. Beispielsweise werden von dem Lesegerät und der integrierten Schaltung hierzu Verfahren der sogenannten Basis Access Control und/oder Extended Access Control implementiert.

Nach einer Ausführungsform der Erfindung handelt es sich bei dem Dokument um ein Wert- oder Sicherheitsdokument, wie zum Beispiel ein ID-Dokument, d. h. ein Ausweisdokument, wie zum Beispiel einen Personalausweis, Reisepass, Führerschein oder Firmenausweis, oder ein Zahlungsmittel, wie zum Beispiel eine Banknote, eine Kreditkarte, oder einen sonstigen Berechtigungsnachweis, wie zum Beispiel eine Eintrittskarte, einen Frachtbrief, ein Visum oder dergleichen. Das Dokument kann papier- und/oder kunststoffbasiert ausgebildet sein. Insbesondere kann das Dokument buchartig oder kartenförmig ausgebildet sein. Ferner kann es sich bei dem Dokument um eine Chipkarte handeln.

In einem weiteren Aspekt betrifft die Erfindung ein Verfahren zur Selbstverifikation eines Dokuments mit folgenden Schritten: Sendung einer Strahlung von Sendemitteln des Dokuments zu einem Konversionsbereich, wobei der Konversionsbereich zur Konvertierung einer Frequenz der Strahlung ausgebildet ist, Empfang der konvertierten Strahlung durch Empfangsmittel des Dokuments von dem Konversionsbereich, wobei die Empfangsmittel ein Empfangssignal erzeugen, Auswertung des Empfangssignals durch eine integrierte Schaltung des Dokuments, um die Selbstverifikation vorzunehmen.

In einem weiteren Aspekt betrifft die Erfindung ein Computerprogrammprodukt mit von einer integrierten Schaltung eines Dokuments ausführbaren Programminstruktionen zur Durchführung einer Ausführungsform eines erfindungsgemäßen Verfahrens.

Im Weiteren werden Ausführungsformen der Erfindung mit Bezugnahme auf die Zeichnungen näher erläutert. Es zeigen:
- Figur 1: eine schematische Schnittansicht einer ersten Ausführungsform eines erfindungsgemäßen Dokuments,
- Figur 2: ein Blockdiagramm einer Ausführungsform einer erfindungsgemäßen integrierten Schaltung,
- Figur 3: ein Flussdiagramm einer Ausführungsform eines erfindungsgemäßen Verfahrens,
- Figur 4: eine schematische Schnittansicht einer weiteren Ausführungsform eines erfindungsgemäßen Dokuments,
- Figur 5: ein Flussdiagramm einer Ausführungsform eines erfindungsgemäßen Verfahrens,
- Figur 6: eine schematische Schnittansicht einer weiteren Ausführungsform eines erfindungsgemäßen Dokuments,
- Figur 7: eine schematische Schnittansicht einer weiteren Ausführungsform eines erfindungsgemäßen Dokuments,
- Figur 8: ein Spektrum der gesendeten Strahlung sowie die spektrale Empfangssensitivität,
- Figur 9: ein Blockdiagramm eines RFID-Systems bestehend auf einer Ausführungsform eines erfindungsgemäßen Dokuments und eines Lesegeräts.

Elemente der nachfolgenden Ausführungsformen, die einander entsprechen, sind jeweils mit denselben Bezugszeichen gekennzeichnet.

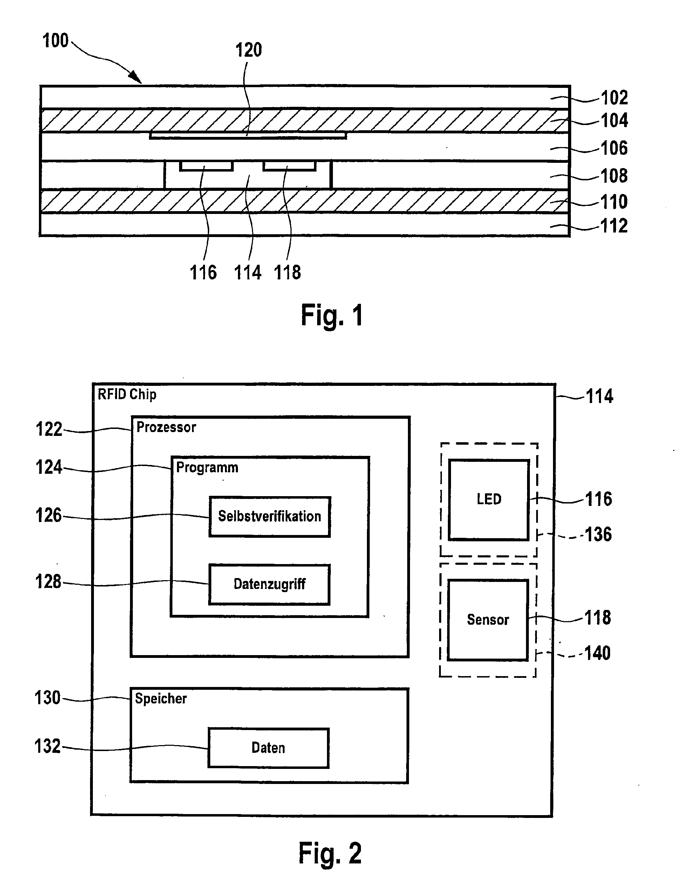

Die Figur 1 zeigt eine Ausführungsform eines erfindungsgemäßen Dokuments 100. Das Dokument 100 hat einen Dokumentenkörper, der durch einen Schichtaufbau gebildet wird. Beispielsweise werden die einzelnen Schichten durch verschiedenartige Folien gebildet, die zum Beispiel aufeinander laminiert sind. Das Dokument 100 hat eine obere Schicht 102, die transparent ist. Darauf folgt eine Schicht 104, die opak ist. Die darauffolgenden Schichten 106 und 108 sind transparent, wohingegen die Schicht 110 wiederum opak ist. Die Rückseite des Dokuments 100 wird schließlich durch eine transparente Schicht 112 gebildet.

Die Schicht 108 beinhaltet eine integrierte Schaltung 114. Die integrierte Schaltung 114 kann silizium- und/oder polymerbasiert ausgebildet sein. Insbesondere kann es sich bei der integrierten Schaltung 114 um einen sogenannten RFID-Chip handeln.

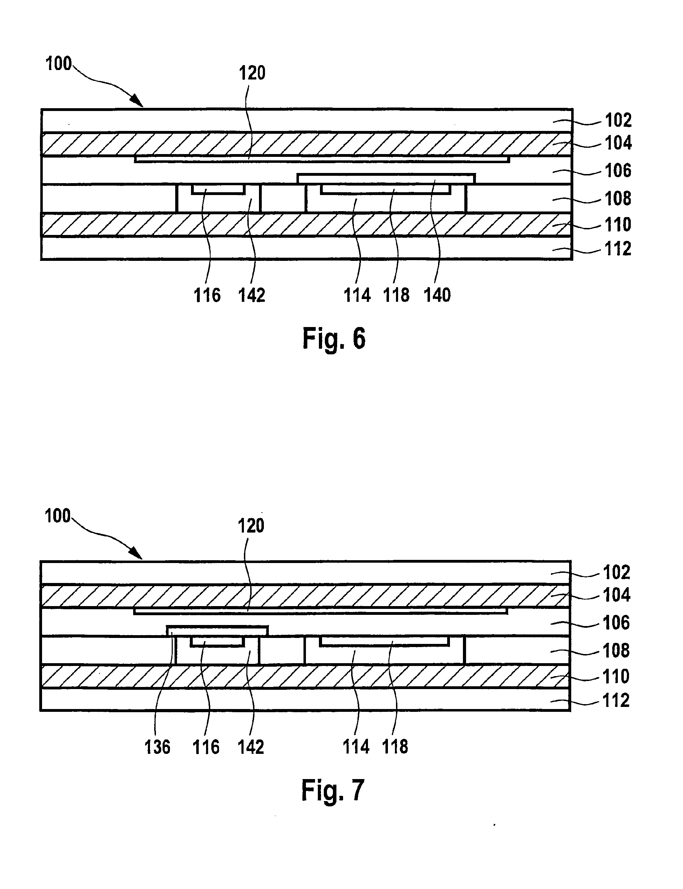

Die integrierte Schaltung 114 beinhaltet eine Strahlungsquelle 116, die beispielsweise durch eine Programmlogik der integrierten Schaltung 114 ansteuerbar ist. Die Strahlungsquelle 116 ist beispielsweise so ausgebildet, dass sie Strahlung nur in einen ersten Frequenzbereich abgibt. Alternativ kann die Strahlungsquelle 116 so ausgebildet sein, dass sie in einem breitbandigeren Frequenzbereich Strahlung abgibt. In diesem Fall kann ein Filter vorgesehen sein, um nur Strahlung in dem ersten Frequenzbereich durchzulassen (vgl. hierzu die Ausführungsform der Figur 7), um hierdurch die Sendemittel zu realisieren.

Die integrierte Schaltung 114 beinhaltet ferner einen Strahlungssensor 118 zur Bildung der Empfangsmittel. Der Strahlungssensor ist in einem zweiten Frequenzbereich, der von dem ersten Frequenzbereich verschieden ist, sensitiv. Falls der Strahlungssensor 118 in einem breitbandigeren Frequenzbereich strahlungssensitiv ist, so kann der Empfangsbereich auf den zweiten Frequenzbereich reduziert werden, indem mittels eines Filters nur dieser zweite Frequenzbereich zu dem Strahlungssensor 118 durchgelassen wird (vgl. hierzu die Ausführungsform der Figur 6), um die Empfangsmittel zu realisieren.

Die integrierte Schaltung 114 ist vorzugsweise zwischen zwei opaken Schichten, d.h. hier zwischen den Schichten 104 und 110, angeordnet, sodass Vorhandensein der integrierten Schaltung 114 für einen Benutzer des Dokuments 100 nicht ohne weiteres augenfällig ist.

In der Schicht 106 beziehungsweise zwischen den Schichten 104 und 106 ist oberhalb der integrierten Schaltung 114 eine Konversionsschicht 120 angeordnet. Die Konversionsschicht dient zur sogenannten Up- oder Down-Conversion von auf die Konversionsschicht 120 einfallender Strahlung. Wenn die Konversionsschicht für eine Upconversion ausgebildet ist, so konvertiert die Konversionsschicht 120 einfallende Strahlung in eine Strahlung einer höheren Frequenz; wenn die Konversionsschicht 120 dagegen für eine Down-Conversion ausgebildet ist, so konvertiert sie einfallende Strahlung in eine Strahlung einer geringeren Frequenz. Die Konversionsschicht kann insbesondere durch Strahlung in einem ersten Frequenzbereich angeregt werden; liegt die Strahlung außerhalb des ersten Frequenzbereichs so erfolgt keine oder eine deutlich geringere Emission von Strahlung in einem anderen Frequenzbereich, sondern die einfallende Strahlung wird lediglich oder hauptsächlich absorbiert, transmittiert und/oder reflektiert. Zur Realisierung der Konversionsschicht können an sich bekannte Farben des Wert- oder Sicherheitsdrucks eingesetzt werden, um die Konversionsschicht 120 drucktechnisch aufzubringen. Beispielsweise kann die Konversionsschicht 120 für einen Down-Conversion ausgebildet sein, wenn die Konversionsschicht 120 einen Fluoreszenz- oder Phosphoreszenz-Farbstoff beinhaltet.

Durch die Konversionsschicht 120 kann gleichzeitig ein optisches Sicherheitsmerkmal des Dokuments 100 gegeben sein, welches optisch mit oder ohne Hilfsmittel durch einen Benutzer des Dokuments 100 geprüft werden kann. Wenn die Konversionsschicht 120 beispielsweise Fluoreszenz-Farbstoffe beinhaltet, so kann das hierdurch gegebene Sicherheitsmerkmal durch Bestrahlung der Konversionsschicht 120 zum Beispiel mit UV-Licht geprüft werden, da die Konversionsschicht 120 dann aufleuchtet und Licht im sichtbaren Bereich abgibt.

Alternativ oder zusätzlich können ein oder mehrere Konversionsbereiche in dem Dokumentenkörper im dem Strahlengang von der Strahlungsquelle 116 zu dem Strahlungssensor 118 angeordnet sein, wie zum Beispiel in der Schicht 106.

Zur Durchführung einer Selbstverifikation steuert die integrierte Schaltung 114 die Strahlungsquelle 116 zur Abgabe von Strahlung in dem ersten Frequenzbereich an. Diese Strahlung trifft auf die Konversionsschicht 120 und wird von der Konversionsschicht 120 in Strahlung des zweiten Frequenzbereichs konvertiert. Die Strahlung mit dem zweiten Frequenzbereich trifft auf den Strahlungssensor 118 und ruft dort ein Empfangssignal hervor. Dieses Empfangssignal wird von der integrierten Schaltung 114 ausgewertet. Hierzu kann eine Überprüfung des Empfangssignals mittels einem oder mehreren vorgegebenen Kriterien erfolgen. Beispielsweise wird von der integrierten Schaltung 114 geprüft, ob eine Energie des Empfangssignals innerhalb eines vorgegebenen Sollbereichs liegt.

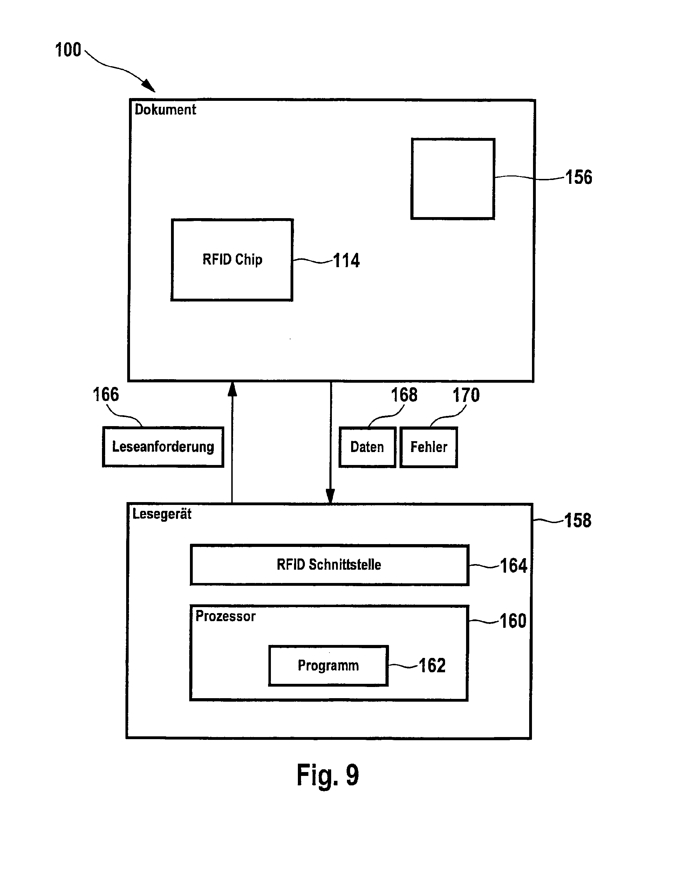

Wenn die Selbstverifikation erfolgreich war, so generiert die integrierte Schaltung 114 ein erstes Signal; im gegenteiligen Fall generiert die integrierte Schaltung 114 ein zweites Signal. Das erste bzw. das zweite Signal kann lediglich für die interne Weiterverarbeitung durch die integrierte Schaltung 114 dienen, wie zum Beispiel zur Freischaltung oder zur Abschaltung einer bestimmten Funktion der integrierten Schaltung 114. Alternativ oder zusätzlich können das erste und/oder das zweite Signal auch zu einem externen Lesegerät übertragen werden (vgl. die Ausführungsform der Figur 9).

Die hier betrachtete Ausführungsform ist besonders vorteilhaft, da das durch die Konversionsschicht 120 gegebene optische Sicherheitsmerkmal nicht nur visuell durch einen Benutzer überprüft werden kann, sondern auch automatisch durch die integrierte Schaltung 114 für eine Selbstverifikation des Dokuments 100. Besonders vorteilhaft ist dabei, dass der manuelle Aufwand für eine visuelle Überprüfung der Konversionsschicht 120 entfallen kann. Ferner ist die Selbstverifikation durch die integrierte Schaltung 114 auch sicherer als eine visuelle Inspektion des Sicherheitsmerkmals, da genau geprüft werden kann, ob die Konversionsschicht 120 tatsächlich die Eigenschaft hat, aufgrund einer Anregung von Strahlung im ersten Frequenzbereich diese in Strahlung des zweiten Frequenzbereichs zu konvertieren, was mit dem bloßen Auge kaum oder nicht möglich ist.

Insbesondere ist hierdurch auch eine Überprüfung dahingehend möglich, ob nicht die integrierte Schaltung 114 einem echten Dokument entnommen worden ist, um sie in einem gefälschten Dokumentenkörper einzubringen. Wenn sich der gefälschte Dokumentenkörper hinsichtlich der Eigenschaften der Konversionsschicht 120 von dem echten Dokumentenkörper unterscheidet, so muss die Selbstverifikation der integrierten Schaltung 114 dann fehlschlagen, sodass das gefälschte Dokument unbrauchbar ist.

Insbesondere kann die Sicherheit des Dokumentes auch dadurch erhöht werden, dass bei der Verifikation des Dokumentes die von Strahlungsquelle 116 ausgehende Strahlung, welche das Dokument verlässt, detektiert und/oder visuell beobachtet wird, beispielsweise indem das Aufleuchten der Konversionsschicht 120 beobachtet wird. Auf diese Weise kann sicher gestellt werden, dass der integrierte Schaltkreis 114 die Selbstverifikation durchführt und nicht durch einen manipulierten integrierten Schaltkreis ersetzt wurde.

Die Figur 2 zeigt eine Ausführungsform der integrierten Schaltung 114 als RFID-Chip. Die integrierte Schaltung 114 ist in dieser Ausführungsform mit einer Funkschnittstelle verbunden oder beinhaltet eine solche. Über die Funkschnittstelle kann die integrierte Schaltung 114 mittels eines RFID-Verfahrens mit einem Lesegerät (vgl. die Ausführungsform der Figur 9) kommunizieren.

Die integrierte Schaltung 114 beinhaltet einen Prozessor 122 zur Ausführung von Programminstruktionen 124, durch welche ein Computerprogrammprodukt gebildet wird.

Die Programminstruktionen 124 beinhalten ein Programmmodul 126 für die Durchführung einer Selbstverifikation des Dokuments 100 sowie ein Programmmodul 128 zur Durchführung eines Zugriffs auf in einem Speicher 130 der integrierten Schaltung 114 gespeicherte Daten 132. Bei den Daten 132 kann es sich um Personalisierungsdaten handeln, wie zum Beispiel Angaben bezüglich des Trägers des Dokuments 100, ein oder mehrere biometrische Merkmale oder Angaben bezüglich des Dokuments 100, d.h. beispielsweise Angaben zu dem Ausstellungsdatum, der Gültigkeit und/oder der ausstellenden Behörde.

Die integrierte Schaltung 114 beinhaltet ferner zumindest eine Strahlungsquelle 116, die als Leuchtdiode ausgebildet sein kann. Um die Sendemittel zum Senden von Strahlung nur in dem ersten Frequenzbereich zu realisieren, kann vor der Strahlungsquelle 116 ein optischer Filter 136 angeordnet sein, der die Strahlung nur in dem ersten Frequenzbereich durchlässt.

Die integrierte Schaltung 114 beinhaltet ferner einen Strahlungssensor 118, der beispielsweise als Fotodiode ausgebildet sein kann. Zur Realisierung von Empfangsmitteln, die nur in dem zweiten Frequenzbereich sensitiv sind, kann vor den Strahlungssensor 118 ein optischer Filter 140 angeordnet sein, der nur Strahlung in dem zweiten Frequenzbereich durchlässt.

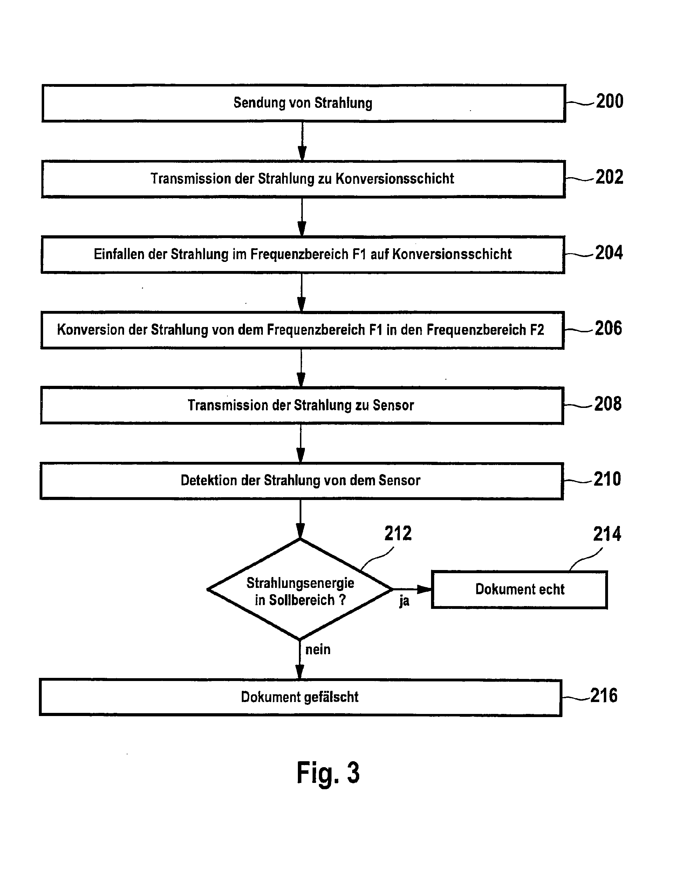

Die Figur 3 zeigt eine Ausführungsform eines von dem Programmmodul 126 implementierten Verfahrens zur Selbstverifikation des Dokuments 100.

In dem Schritt 200 wird die Strahlungsquelle 116 von dem Programmmodul 126 zum Senden der Strahlung angesteuert.

Die von der Strahlungsquelle 116 und von dem optischen Filter 136 gefilterte Strahlung des ersten Frequenzbereichs F1 wird in Richtung auf die Konversionsschicht 120 (vgl. Figur 1) abgestrahlt (Schritt 202). In dem Schritt 204 fällt die Strahlung des ersten Frequenzbereichs F1 auf die Konversionsschicht 120 und wird dort in dem Schritt 206 in den zweiten Frequenzbereich F2 konvertiert.

Die Strahlung des zweiten Frequenzbereichs F2 wird dann in dem Schritt 208 zu dem Strahlungssensor 118 transmittiert und dort in dem Schritt 210 detektiert. Beispielsweise generiert der Sensor in dem Schritt 210 ein Empfangssignal, welches die durch die Strahlung empfangene Energie angibt. Diese Energie ergibt sich aus der Faltung des Spektrums der einfallenden Strahlung mit der spektralen Empfangssensitivität des Strahlungssensors 118. Beispielsweise ergibt sich der Energiewert aus der Kreuzkorrelation des Spektrums der Strahlung in dem zweiten Frequenzbereich und der Empfangssensitivität des Strahlungssensors 118 in dem zweiten Frequenzbereich.

In dem Schritt 212 wird anhand des Empfangssignals von der integrierten Schaltung 114 geprüft, ob die empfangene Strahlungsenergie in einem vordefinierten Sollbereich liegt. Ist dies der Fall, so wird in dem Schritt 214 das erste Signal generiert, welches anzeigt, dass das Dokument 100 echt ist. Im gegenteiligen Fall wird in dem Schritt 216 das zweite Signal generiert, welches anzeigt, dass das Dokument gefälscht ist.

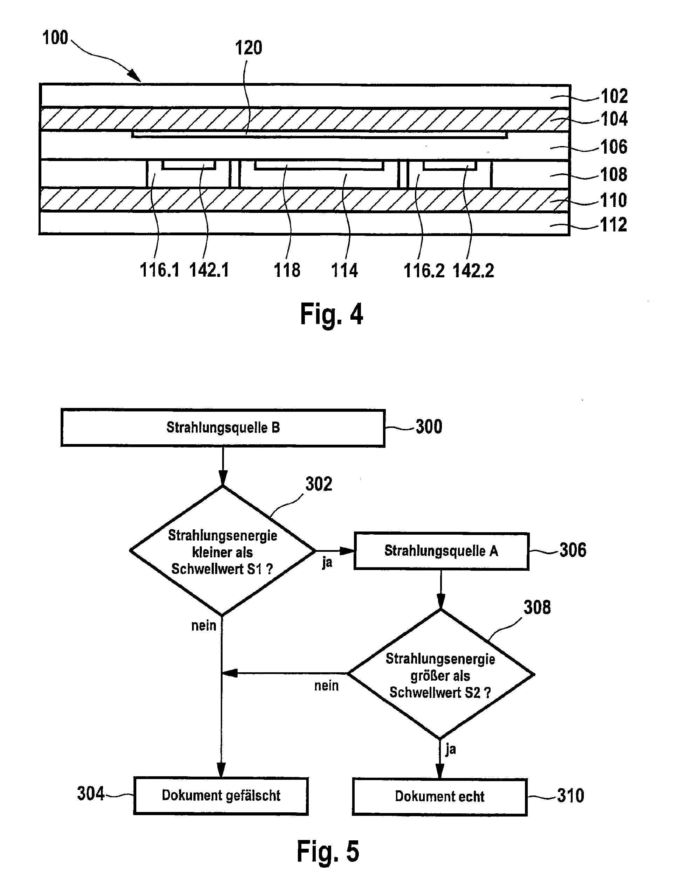

Die Figur 4 zeigt eine weitere Ausführungsform eines erfindungsgemäßen Dokuments 100 mit zwei verschiedenen Strahlungsquellen 116.1 und 116.2, die hier nicht Bestandteil der integrierten Schaltung 114 sind. Die Strahlungsquelle 116.1 beinhaltet einen Emitter 142.1 zur Aussendung von Strahlung in dem ersten Frequenzbereich. Beispielsweise kann es sich bei dem Emitter 142.1 um eine LED handeln. Über dieser kann ein optischen Filter angeordnet sein. Die Strahlungsquelle 116.2 beinhaltet dagegen einen Emitter 142.2 zur Aussendung von Strahlung in einen dritten Frequenzbereich. Der dritte Frequenzbereich ist von dem ersten Frequenzbereich und von dem zweiten Frequenzbereich, in dem der Strahlungssensor 118 sensitiv ist, verschieden. Auch bei dem Emitter 142.2 kann es sich um eine LED handel, über welcher ein optischen Filter angeordnet sein kann.

Vorzugsweise sind die Strahlungsquellen 116.1 und 116.2 mit der integrierten Schaltung 114 gekoppelt, sodass sie von der integrierten Schaltung 114 ansteuerbar sind. Vorzugsweise sind die Strahlungsquellen 116.1 und 116.2 in derselben Schicht 108 des Dokumentenkörpers angeordnet wie die integrierte Schaltung 114.

Wenn die integrierte Schaltung 114 die Strahlungsquelle 116.1 ansteuert, so fällt Strahlung des ersten Frequenzbereichs auf die Konversionsschicht 120, welche in Strahlung des zweiten Frequenzbereichs konvertiert wird. Dies hat ein erstes Empfangssignal des Strahlungssensors 118 zur Folge. Wenn die integrierte Schaltung 114 dagegen die Strahlungsquelle 116.2 ansteuert, so fällt Strahlung des dritten Frequenzbereichs auf die Konversionsschicht 120, welche die Konversionsschicht nicht oder nur wenig anregt. Dies hat kein oder nur ein schwaches zweites Empfangssignal zur Folge. Die ersten und zweiten Empfangssignale werden beispielsweise von einer Programmlogik der integrierten Schaltung 114 ausgewertet, insbesondere anhand von einem oder mehreren vorgegebenen Kriterien. Falls eins oder mehrere der Kriterien erfüllt ist, so ist die Selbstverifikation erfolgreich abgeschlossen.

Die Figur 5 zeigt eine Ausführungsform eines erfindungsgemäßen Verfahrens zur Selbstverifikation des Dokuments 100, insbesondere in der Ausführungsform der Figur 4. In dem Schritt 300 wird eine Strahlungsquelle B, d.h. zum Beispiel die Strahlungsquelle 116.2 in der Ausführungsform der Figur 4, von der integrierten Schaltung angesteuert, um Strahlung in dem dritten Frequenzbereich abzugeben. Daraufhin empfängt die integrierte Schaltung kein oder nur ein schwaches Empfangssignal, welches die daraufhin empfangene Strahlungsenergie repräsentiert. In dem Schritt 302 prüft die integrierte Schaltung daraufhin, ob diese Strahlungsenergie kleiner als ein vorgegebener Schwellwert S1 ist. Ist dies nicht der Fall, so gilt das Dokument als gefälscht und in dem Schritt 304 wird das zweite Signal generiert, d.h. dasjenige Signal, welches anzeigt, dass das Dokument gefälscht ist.

Im gegenteiligen Fall steuert die integrierte Schaltung die Strahlungsquelle A an, d.h. beispielsweise die Strahlungsquelle 116.1 in der Ausführungsform der Figur 4, sodass die Strahlungsquelle A eine Strahlung in dem ersten Frequenzbereich abgibt. Daraufhin empfängt die integrierte Schaltung ein Empfangssignal, welches die aufgrund der Ansteuerung der Strahlungsquelle A empfangene Strahlungsenergie repräsentiert.

In Schritt 308 prüft die integrierte Schaltung, ob diese Strahlungsenergie größer als ein vorgegebener Stellwert S2 ist. Wenn dies nicht der Fall ist, gilt das Dokument als gefälscht und in dem Schritt 304 wird wiederum das zweite Signal generiert. Im gegenteiligen Fall gilt das Dokument als echt und in dem Schritt 310 wird das erste Signal generiert, um anzuzeigen, dass das Dokument echt ist.

In einem weiteren optionalen Schritt kann das Verhältnis der beiden Strahlungsenergien ermittelt und mit einem Sollwert verglichen werden. Liegt dieser außerhalb des Bereiches, so kann das Dokument ebenfalls als gefälscht erkannt werden.

Beispielsweise ist der Emitter 142.1 der Strahlungsquelle 116.1 zur Emission von UV A Strahlung einer Wellenlänge von 320 nm bis 400 nm ausgebildet, insbesondere von 365 nm. Dagegen ist der Emitter 142.2 zur Emission von UV B Strahlung einer Wellenlänge von 280 nm bis 320 nm ausgebildet, insbesondere von 307 nm. Die Konversionsschicht 120 kann im Wesentlichen nur durch UV A Strahlung angelegt werden, nicht aber durch UV B Strahlung. Beispielsweise beinhaltet die Konversionsschicht 120 einen fluoreszierenden Farbstoff mit entsprechenden Eigenschaften, d.h. einen fluoreszierenden Farbstoff, der nur durch UV A Strahlung, nicht aber durch UV B Strahlung zur Fluoreszenz angeregt werden kann. Sofern UV A Strahlung auf die Konversionsschicht 120 einfällt, wird diese hierdurch angeregt und gibt Strahlung im Frequenzbereich von beispielsweise 600 nm bis 700 nm ab (rote Fluoreszenz). Fällt hingegen UV B Strahlung auf die Konversionsschicht 120 ein, so wird diese im Wesentlichen nur absorbiert oder transmittiert.

Beispielsweise sind die Emitter 142.1, 142.2 wie oben beschrieben zur Abgabe von UV A und UV B Strahlung ausgebildet. Die Konversionsschicht 120 enthält einen Fluoreszenz- oder Phosphoreszenzfarbstoff, welcher bei Anregung mit UV A eine Emission einer ersten Intensität und bei Anregung mit UV B eine Emission einer zweiten Intensität aufweist. Beispielsweise ist die zweite Intensität doppelt so hoch wie die erste. Hieraus ergibt sich, dass das Verhältnis der Strahlungsenergien im Bereich 1:2 mit einer Abweichung von zum Beispiel 10% liegen darf. Dieses Verhältnis wird sowohl von den stofflichen Eigenschaften der Konversionsschicht 120 als auch dem Verhältnis der emittierten Strahlungsdosen der Emitter 142.1, 142.2 bestimmt, sodass dieses nahezu beliebig eingestellt werden kann.

Alternativ oder zusätzlich wird mit Hilfe des Strahlungssensors ein sogenannter Dunkelwert ermittelt, d.h. ein Empfangssignal, wenn beide Strahlungsquellen A und B abgeschaltet sind. Dieses Empfangssignal hängt dann also nur von unter Umständen auf den Strahlungssensor 118 aus der Umgebung einfallende Strahlung ab. Dieses Eingangssignal kann zur Kalibrierung der Schwellwerte S1 und/oder S2 und/oder anderer Auswertungskriterien verwendet werden. Wenn beispielsweise bei abgeschalteten Strahlungsquellen A und B relativ viel Strahlungsenergie auf den Strahlungssensor einfällt, so werden die Schwellwerte S1 und S2 entsprechend erhöht. Wenn dagegen wenig oder keine Strahlungsenergie einfällt, werden die Schwellwerte S1 und S2 dementsprechend verringert.

Die Figur 6 zeigt eine weitere Ausführungsform eines erfindungsgemäßen Dokuments mit einer einzigen Strahlungsquelle 116 und einem Emitter 142 zur Abgabe von Strahlung in dem ersten Frequenzbereich. Vor dem Strahlungssensor 118 ist hier in dem Strahlengang zwischen der Konversionsschicht 120 und dem Strahlungssensor 118 ein optischer Filter 140 angeordnet, welcher Strahlung in dem zweiten Frequenzbereich, nicht aber Strahlung in dem ersten Frequenzbereich durchlässt. Falls also die Konversionsschicht 120 nicht vorhanden ist oder eine gefälschte Konversionsschicht 120 vorhanden ist, welche die Strahlung aus dem ersten Frequenzbereich nicht in den zweiten Frequenzbereich, sondern einem anderen Frequenzbereich konvertiert, hat dies zur Folge, dass wenig oder keine Strahlungsenergie den Strahlungssensor 118 erreicht. Das hieraus resultierende Empfangssignal repräsentiert also einen Energiewert, der nicht in dem Sollbereich liegt (vgl. Schritt 212 in der Ausführungsform der Figur 3), sodass die Selbstverifikation des Dokuments 100 fehlschlägt und das zweite Signal von der integrierten Schaltung 114 generiert wird.

Die Figur 7 zeigt eine weitere Ausführungsform eines erfindungsgemäßen Dokuments 100. Im Unterschied zu der Ausführungsform der Figur 6 ist hier ein optischer Filter 136 auf dem Emitter 142 angeordnet. Der optische Filter 136 ist so ausgebildet, dass er nur Licht in dem ersten Frequenzbereich, welches von dem Strahlungssensor 118 nicht detektiert werden kann, durchlässt, wobei durch die Strahlung in dem ersten Frequenzbereich die Konversionsschicht 120 anregbar ist, sodass diese Strahlung in dem zweiten Frequenzbereich abgibt.

Es sind auch Ausführungsformen möglich, bei denen sowohl senderseitig als auch empfängerseitig jeweils solche optische Filter angeordnet sind, wie dies zum Beispiel in der Ausführungsform der Figur 2 der Fall sein kann.

Die optischen Filter 136 und/oder 140 können drucktechnisch aufgebracht werden, insbesondere durch Aufdruck auf die Unterseite der Folie 106.

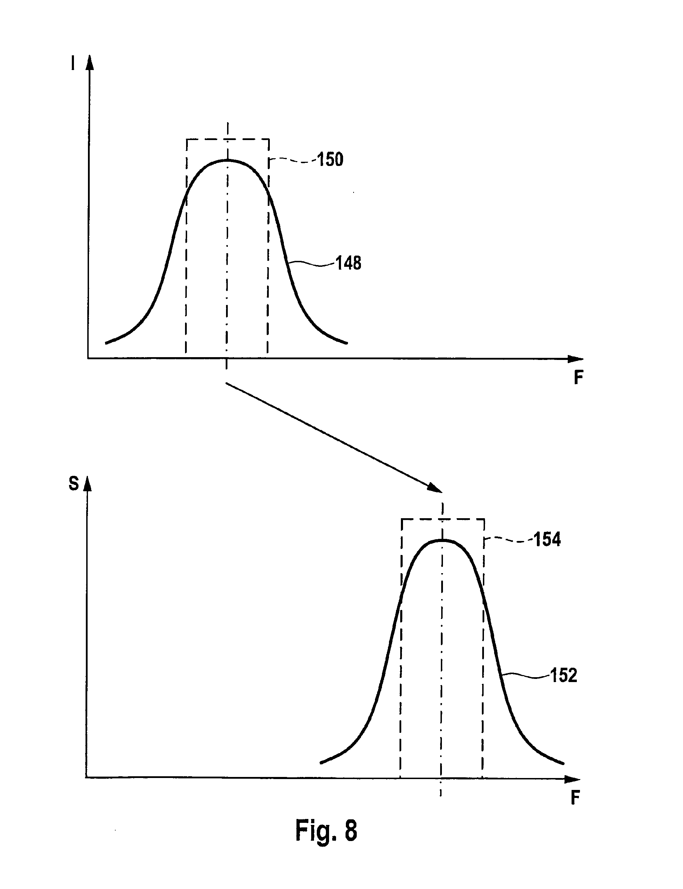

Die Figur 8 zeigt exemplarisch ein Spektrum 148 der von der Strahlungsquelle 116 abgegebenen Strahlung, d.h. den Verlauf der Intensität I der Strahlung über der Frequenz F. Da das Spektrum 148 relativ breitbandig ist, wird mit Hilfe des Filters 136 (vgl. die Ausführungsform der Figuren 2 und 7) nur der Teil der Strahlung durchgelassen, welcher in dem ersten Frequenzbereich 150 liegt.

Die Figur 8 zeigt ferner die spektrale Empfangsempfindlichkeit 152 des Strahlungssensors 118, d.h. das Ausgangssignal S des Strahlungssensors 118 in Abhängigkeit von der Frequenz F der auf den Strahlungssensor 118 einfallenden Strahlung. Da die Empfangsempfindlichkeit 152 relativ breitbandig ist, wird diese auf den zweiten Frequenzbereich 154 mit Hilfe des Filters 140 begrenzt.

Die Konversionsschicht 120 ist durch Strahlung in den ersten Frequenzbereich 150 anregbar. Die Konversionsschicht 120 gibt bei Anregung in dem ersten Frequenzbereich Strahlung in den zweiten Frequenzbereich 154 ab, welche dann von dem Strahlungssensor 118 empfangen werden kann. Wenn es sich um eine gefälschte Konversionsschicht 120 handelt, so schlägt die Selbstverifikation des Dokuments 100 fehl, wenn diese gefälschte Konversionsschicht 120 nicht in dem ersten Frequenzbereich 150 anregbar ist oder wenn die Konversionsschicht 120 zwar in dem ersten Frequenzbereich 150 anregbar ist, jedoch die von der Konversionsschicht 120 daraufhin abgegebene Strahlung nicht oder nicht in hinreichendem Maße innerhalb des zweiten Frequenzbereichs 154 liegt.

In dem dargestellten Beispiel wird die Frequenz durch die Konversionsschicht erhöht, dass heißt, es handelt sich um einen upconversion Prozess.

Die Figur 9 zeigt ein Blockdiagramm eines erfindungsgemäßen RFID-Systems. Bei dem Dokument 100 handelt es sich hier um ein Ausweisdokument, wobei die integrierte Schaltung 114 als RFID-Chip ausgeführt ist und in den Dokumentenkörper des Dokuments 100 integriert ist. Das Dokument 100 beinhaltet ein Passfoto 156, welches auf dem Dokument 100 aufgedruckt sein kann oder welches über eine in den Dokumentenkörper integrierte Anzeigevorrichtung, insbesondere ein bistabiles Display, zum Beispiel ein elektrophoretisches Display, ein emissives Display, zum Beispiel ein LED-Display und insbesondere ein OLED-Dispaly, angezeigt wird.

Ein Lesegerät 158 hat einen Prozessor 160 zur Ausführung von Programminstruktionen 162. Bei dem Lesegerät 158 kann es sich um ein dediziertes Lesegerät oder einen entsprechend eingerichteten Personalcomputer handeln. Das Lesegerät 158 hat eine RFID-Schnittstelle 164 zur Kommunikation mit dem RFID-Chip 114 mittels eines RFID-Verfahrens.

Um die Daten 132 (vgl. hierzu die Figur 2) aus dem RFID-Chip 114 auszulesen, beispielsweise zum Zwecke einer Ausweiskontrolle, steuern die Programminstruktionen die RFID-Schnittstelle 164 zum Senden einer Leseanforderung 166 an das Dokument 100 an. Durch die Leseanforderung 166 wird elektrische Energie in die integrierte Schaltung 114 eingekoppelt, sodass diese daraufhin aktiviert wird.

Die integrierte Schaltung 114 führt dann eine Selbstverifikation des Dokuments 100 durch, beispielsweise nach dem Verfahren der Figur 3 oder der Figur 5. Wenn die Selbstverifikation erfolgreich ist, ist eine notwendige Bedingung dafür erfüllt, dass die Daten 132 mit einem Antwortsignal 168 von der integrierten Schaltung 114 zu dem Lesegerät 158 übertragen werden. Diese notwendige Bedingung kann auch hinreichend sein. Je nach Ausführungsform müssen weitere notwendige Bedingungen erfüllt werden, damit die Daten 132 mit dem Antwortsignal 168 übertragen werden können, wie zum Beispiel die erfolgreiche Durchführung eines Basis Access Control- und/oder eines Extended Access Control-Verfahrens.

Falls dagegen die Selbstverifikation fehlschlägt, so wird ein Fehlersignal 170 von der integrierten Schaltung 114 generiert. Je nach Ausführungsform antwortet die integrierte Schaltung 114 auf die Leseanforderung 166 dann nicht oder mit dem Fehlersignal 170.

### Bezugszeichenliste

- 100: Dokument
- 102: Schicht
- 104: Schicht
- 106: Schicht
- 108: Schicht
- 110: Schicht
- 112: Schicht
- 114: integrierte Schaltung
- 116: Strahlungsquelle
- 118: Strahlungssensor
- 120: Konversionsschicht
- 122: Prozessor
- 124: Programminstruktionen
- 126: Programmmodul
- 128: Programmmodul
- 130: Speicher
- 132: Daten
- 136: optischer Filter
- 140: optischer Filter
- 142: Emitter
- 148: Spektrum
- 150: Frequenzbereich
- 152: Empfangsempfindlichkeit
- 154: Frequenzbereich
- 156: Passfoto
- 158: Lesegerät
- 160: Prozessor
- 162: Programminstruktionen
- 164: RFID-Schnittstelle
- 166: Leseanforderung
- 168: Antwortsignal
- 170: Fehlersignal

## Patentansprüche

1. Dokument mit einer integrierten Schaltung (114), mit einem Konversionsbereich (120), mit Sendemitteln (116, 136; 142) zur Sendung einer Strahlung zu dem Konversionsbereich, wobei der Konversionsbereich zur Konvertierung einer Frequenz der Strahlung ausgebildet ist, und mit Empfangsmitteln (118, 140) zum Empfang der konvertierten Strahlung von dem Konversionsbereich, wobei die Empfangsmittel zur Erzeugung eines Empfangssignals und zur Eingabe des Empfangssignals in die integrierte Schaltung ausgebildet sind, und wobei die integrierte Schaltung zur Auswertung des Empfangssignals ausgebildet ist, um eine Selbstverifikation des Dokuments vorzunehmen.

2. Dokument nach Anspruch 1 mit einem Dokumentenkörper, wobei einer oder mehrere der Konversionsbereiche in einem Strahlengang der Strahlung von den Sendemitteln zu den Empfangsmittel angeordnet sind.

3. Dokument nach Anspruch 1 oder 2, wobei das Dokument einen Schichtaufbau hat, wobei der Konversionsbereich in oder auf zumindest einer der Schichten (102, 104, 106, 108, 110, 112) des Schichtaufbaus angeordnet ist.

4. Dokument nach Anspruch 1, 2 oder 3,
- wobei der Konversionsbereich aufgedruckt ist, und/oder
- wobei die Sendemittel und/oder die Empfangsmittel jeweils einen aufgedruckten Filter aufweisen.

5. Dokument nach einem der vorhergehenden Ansprüche, wobei die Sendemittel zur Sendung der Strahlung in einem ersten Frequenzbereich ausgebildet sind, wobei die Empfangsmittel zum Empfang der Strahlung in einem zweiten Frequenzbereich ausgebildet sind, und wobei die ersten und zweiten Frequenzbereiche unterschiedlich sind, wobei der Konversionsbereich durch Strahlung in dem ersten Frequenzbereich anregbar und zur Konvertierung der Strahlung von dem ersten Frequenzbereich in den zweiten Frequenzbereich ausgebildet ist.

6. Dokument nach einem der vorhergehenden Ansprüche, wobei die Sendemittel und/oder die Empfangsmittel ganz oder teilweise in die Schaltung integriert sind.

7. Dokument nach einem der vorhergehenden Ansprüche,
- wobei die Sendemittel eine Leuchtdiode (116) aufweisen und optional einen ersten Filter (136), welcher von der Leuchtdiode ausgesandte Strahlung in einem ersten Frequenzbereich durchlässt, und/oder
- wobei die Empfangsmittel einen Strahlungsdetektor (118) mit einem zweiten Filter (140) aufweisen, wobei der zweite Filter auf den Strahlungsdetektor einfallende Strahlung in einem zweiten Frequenzbereich durchlässt.

8. Dokument nach einem der vorhergehenden Ansprüche, wobei zur Auswertung des Empfangssignals durch die integrierte Schaltung geprüft wird, ob das Empfangssignal in einem Sollbereich liegt.

9. Dokument nach einem der vorhergehenden Ansprüche, wobei die Sendemittel von der integrierten Schaltung ansteuerbar sind, um die Strahlung in dem ersten Frequenzbereich oder einem dritten Frequenzbereich abzugeben, wobei der dritte Frequenzbereich von den ersten und zweiten Frequenzbereichen verschieden ist.

10. Dokument nach Anspruch 9, wobei das Empfangssignal in dem Sollbereich liegt, wenn die Sendemittel zum Senden der Strahlung in dem ersten Frequenzbereich angesteuert sind, und wobei das Empfangssignal nicht in dem Sollbereich liegt, wenn die Sendemittel zum Senden der Strahlung in dem dritten Frequenzbereich angesteuert sind.

11. Dokument nach einem der vorhergehenden Ansprüche, wobei die integrierte Schaltung einen Datenspeicher (130) zur Speicherung von Daten (132) aufweist und mit einer Funkschnittstelle gekoppelt ist, über die die integrierte Schaltung ein Lesekommando (166) empfangen und die Daten senden kann, wobei die Sendung der Daten nur nach einer erfolgreichen Selbstverifikation des Dokuments erfolgt.

12. Verfahren zur Selbstverifikation eines Dokuments (100) mit folgenden Schritten:
- Sendung einer Strahlung von Sendemitteln (116, 136; 142) des Dokuments zu einem Konversionsbereich (120), wobei der Konversionsbereich zur Konvertierung einer Frequenz der Strahlung ausgebildet ist,
- Empfang der konvertierten Strahlung durch Empfangsmittel (118, 140) des Dokuments von dem Konversionsbereich, wobei die Empfangsmittel ein Empfangssignal erzeugen,
- Auswertung des Empfangssignals durch eine integrierte Schaltung (114) des Dokuments, um die Selbstverifikation vorzunehmen.

13. Verfahren nach Anspruch 12, wobei das Empfangssignal zur Durchführung der Auswertung anhand eines oder mehrerer vorgegebener Kriterien überprüft wird, wobei die Selbstverifikation erfolgreich ist, wenn das Empfangssignal das eine oder die mehreren Kriterien erfüllt.

14. Verfahren nach Anspruch 12 oder 13, wobei das Dokument einen Speicher (130) zur Speicherung von Daten aufweist, und wobei eine Sendung der Daten über eine Funkschnittstelle des Dokuments freigegeben wird, wenn die Selbstverifikation erfolgreich durchgeführt worden ist.

15. Computerprogrammprodukt mit von einer integrierten Schaltung (114) eines Dokuments ausführbaren Programminstruktionen zur Durchführung eines Verfahrens nach einem der Ansprüche 12 bis 14.

## Claims

1. Document comprising an integrated circuit (114), comprising a conversion region (120), comprising transmitting means (116, 136; 142) for transmitting a radiation to the conversion region, wherein the conversion region is designed for converting a frequency of the radiation, and comprising receiving means (118, 140) for receiving the converted radiation from the conversion region, wherein the receiving means are designed for generating a reception signal and for inputting the reception signal into the integrated circuit, and wherein the integrated circuit is designed for evaluating the reception signal in order to perform a self-verification of the document.

2. Document according to Claim 1, comprising a document body, wherein one or a plurality of the conversion regions are arranged in a beam path of the radiation from the transmitting means to the receiving means.

3. Document according to Claim 1 or 2, wherein the document has a layer construction, wherein the conversion region is arranged in or on at least one of the layers (102, 104, 106, 108, 110, 112) of the layer construction.

4. Document according to Claim 1, 2 or 3,
- wherein the conversion region is applied by printing, and/or
- wherein the transmitting means and/or the receiving means in each case have a filter applied by printing.

5. Document according to any of the preceding claims, wherein the transmitting means are designed for transmitting the radiation in a first frequency range, wherein the receiving means are designed for receiving the radiation in a second frequency range, and wherein the first and second frequency ranges are different, wherein the conversion region can be excited by radiation in the first frequency range and is designed for converting the radiation from the first frequency range into the second frequency range.

6. Document according to any of the preceding claims, wherein the transmitting means and/or the receiving means are wholly or partly integrated into the circuit.

7. Document according to any of the preceding claims,
- wherein the transmitting means have a light-emitting diode (116) and optionally a first filter (136), which transmits radiation in a first frequency range, said radiation being emitted by the light-emitting diode, and/or
- wherein the receiving means have a radiation detector (118) with a second filter (140), wherein the second filter transmits radiation in a second frequency range, said radiation being incident on the radiation detector.

8. Document according to any of the preceding claims, wherein, for the purpose of evaluating the reception signal, the integrated circuit checks whether the reception signal lies in a desired range.

9. Document according to any of the preceding claims, wherein the transmitting means can be driven by the integrated circuit in order to emit the radiation in the first frequency range or a third frequency range, wherein the third frequency range is different from the first and second frequency ranges.

10. Document according to Claim 9, wherein the reception signal lies in the desired range if the transmitting means are driven for transmitting the radiation in the first frequency range, and wherein the reception signal does not lie in the desired range if the transmitting means are designed for transmitting the radiation in the third frequency range.

11. Document according to any of the preceding claims, wherein the integrated circuit has a data memory (130) for storing data (132) and is coupled to a radio interface via which the integrated circuit can receive a read command (166) and can transmit the data, wherein the transmission of the data is effected only after a successful self-verification of the document.

12. Method for self-verification of the document (100) comprising the following steps:
- transmission of a radiation by transmitting means (116, 136; 142) of the document to a conversion region (120), wherein the conversion region is designed for converting a frequency of the radiation,
- reception of the converted radiation by receiving means (118, 140) of the document from the conversion region, wherein the receiving means generate a reception signal,
- evaluation of the reception signal by an integrated circuit (114) of the document in order to perform the self-verification.

13. Method according to Claim 12, wherein the reception signal is checked for the purpose of carrying out the evaluation on the basis of one or a plurality of predetermined criteria, wherein the self-verification is successful if the reception signal fulfils the one or the plurality of criteria.

14. Method according to Claim 12 or 13, wherein the document has a memory (130) for storing data, and wherein a transmission of the data via a radio interface of the document is enabled if the self-verification has been carried out successfully.

15. Computer program product comprising program instructions executable by an integrated circuit (114) of a document and serving for carrying out a method according to any of Claims 12 to 14.

## Revendications

1. Document comprenant un circuit intégré (114), comprenant une zone de conversion (120), comprenant des moyens d'émission (116, 136 ; 142) pour envoyer un rayonnement vers la zone de conversion, la zone de conversion étant configurée pour convertir une fréquence du rayonnement, et comprenant des moyens de réception (118, 140) pour recevoir le rayonnement converti par la zone de conversion, les moyens de réception étant configurés pour générer un signal reçu et pour faire entrer le signal reçu dans le circuit intégré, et le circuit intégré étant configuré pour interpréteur le signal reçu afin de procéder à une auto-vérification du document.

2. Document selon la revendication 1, comprenant un corps de document, une ou plusieurs des zones de conversion étant disposées dans un trajet du rayonnement des moyens d'émission vers les moyens de réception.

3. Document selon la revendication 1 ou 2, le document ayant une structure en couches, la zone de conversion étant disposée dans ou sur au moins l'une des couches (102, 104, 106, 108, 110, 112) de la structure en couches.

4. Document selon la revendication 1, 2 ou 3,
- la zone de conversion étant imprimée et/ou
- les moyens d'émission et/ou les moyens de réception présentant respectivement un filtre imprimé sur eux.

5. Document selon l'une des revendications précédentes, les moyens d'émission étant configurés pour émettre le rayonnement dans une première plage de fréquences, les moyens de réception étant configurés pour recevoir le rayonnement dans une deuxième plage de fréquences et la première et la deuxième plage de fréquences étant différentes, la zone de conversion pouvant être excitée par le rayonnement dans la première plage de fréquences et étant configurée pour convertir le rayonnement de la première plage de fréquences en la deuxième plage de fréquences.

6. Document selon l'une des revendications précédentes, les moyens d'émission et/ou les moyens de réception étant entièrement ou partiellement intégrés dans le circuit.

7. Document selon l'une des revendications précédentes,
- les moyens d'émission présentant une diode électroluminescente (116) et, en option, un premier filtre (136) qui laisse passer le rayonnement émis par la diode électroluminescente dans une première plage de fréquences, et/ou
- les moyens de réception présentant un détecteur de rayonnement (118) avec un deuxième filtre (140), le deuxième filtre laissant passer le rayonnement incident sur le détecteur de rayonnement dans une deuxième plage de fréquences.

8. Document selon l'une des revendications précédentes, un contrôle étant effectué pour vérifier si le signal reçu se trouve dans une plage voulue en vue de l'interprétation du signal reçu par le circuit intégré.

9. Document selon l'une des revendications précédentes, les moyens d'émission pouvant être commandés par le circuit intégré pour délivrer le rayonnement dans la première plage de fréquences ou dans une troisième plage de fréquences, la troisième plage de fréquences étant différente de la première et de la deuxième plage de fréquences.

10. Document selon la revendication 9, le signal reçu se trouvant dans la plage voulue lorsque les moyens d'émission sont commandés pour émettre le rayonnement dans la première plage de fréquences, et le signal reçu ne se trouvant pas dans la plage voulue lorsque les moyens d'émission sont commandés pour émettre le rayonnement dans la troisième plage de fréquences.

11. Document selon l'une des revendications précédentes, le circuit intégré présentant une mémoire de données (130) pour enregistrer des données (132) et étant connecté avec une interface radioélectrique par le biais de laquelle le circuit intégré peut recevoir une instruction de lecture (166) et envoyer les données, l'émission des données n'ayant lieu qu'après une auto-vérification réussie du document.

12. Procédé d'auto-vérification d'un document (100) comprenant les étapes suivantes :
- émission d'un rayonnement par des moyens d'émission (116, 136 ; 142) du document vers une zone de conversion (120), la zone de conversion étant configurée pour convertir une fréquence du rayonnement,
- réception du rayonnement converti par des moyens de réception (118, 140) du document par la zone de conversion, les moyens de réception générant un signal reçu,
- interprétation du signal reçu par un circuit intégré (114) du document afin de procéder à l'auto-vérification.

13. Procédé selon la revendication 12, le signal reçu étant vérifié au moyen d'un ou de plusieurs critères prédéfinis en vue d'effectuer l'interprétation, l'auto-vérification étant réussie lorsque le signal reçu satisfait à l'un ou aux plusieurs critères.

14. Procédé selon la revendication 12 ou 13, le document présentant une mémoire (130) pour enregistrer des données et l'émission des données par le biais d'une interface radioélectrique du document étant autorisée lorsque l'auto-vérification s'est déroulée avec succès.

15. Produit de programme informatique comprenant des instructions de programme exécutables par un circuit intégré (114) d'un document pour mettre en oeuvre un procédé selon l'une des revendications 12 à 14.
